# EUROPÄISCHE PATENTSCHRIFT

(11) **EP 4 364 823 B1**
(45) Veröffentlichungstag und Bekanntmachung des Hinweises auf die Patenterteilung: **16.04.2025**
(21) Anmeldenummer: 22205354.8
(22) Anmeldetag: 03.11.2022
(51) Int. Cl.: B01D 33/21, B01D 33/23

(54) **SCHEIBENFILTER**
DISC FILTER
FILTRE À DISQUES

(43) Veröffentlichungstag der Anmeldung: 08.05.2024
(73) Patentinhaber: Landel, Viktor, 51545 Waldbröl (DE); Turevskyy, Sergiy, 53773 Hennef (DE); Schneider, Valeri, 6300 Zug (CH)
(72) Erfinder: Schneider, Valeri, 6300 Zug (CH)
(74) Vertreter: KBN IP Patentanwälte Partnerschaft mbB

(56) Entgegenhaltungen:
- EP-A1- 2 514 500
- EP-B1- 2 427 253
- US-A1- 2020 282 345

## Beschreibung

Die Erfindung betrifft einen Scheibenfilter, umfassend eine zentral angeordnete Trommel und mindestens eine auf der Trommel angeordnete Filterscheibe, die eine Vielzahl von radial über die Trommel überstehenden Filtersegmenten umfasst, welche jeweils einen geschlossenen Filterrahmen mit zwei auf der Trommel befestigten und radial abstehenden Rahmenstreben aufweisen, die am radial äußeren Ende über eine bogenförmige Verbindungsstrebe verbunden sind und in dem Filterrahmen gehalterte Filtereinsätze sowie radial außenseitig die Filtereinsätze abdeckende Abdeckprofile aufweisen.

Scheibenfilter der genannten Art sind bekannt und werden beispielsweise zur Abtrennung von feinen Feststoffteilchen in der Abwasserbehandlung eingesetzt. Ein Beispiel eines solchen Scheibenfilters ist in der EP 2 244 802 B1 beschrieben.

Für den Aufbau der einzelnen Filterscheiben wird häufig eine Modulbauweise aus Filterrahmen und darin gehalterten Filtereinsätzen gewählt, um den Herstellungsaufwand der häufig großformatigen Scheibenfilter zu begrenzen und den kostengünstigen Austausch einzelner Module bei verschleißbedingtem Ausfall realisieren zu können. Die EP 3 932 515 A1 und EP 2 427 253 B1 offenbaren beispielhaft derartige modular aufgebaute Filterscheiben, die sich aus über den Umfang der Trommel betrachtet aneinandergereihten Modulen zu einer vollumfänglich um die Trommel umlaufenden Filterscheibe ergänzen. Ebenfalls kann verwiesen werden auf die Ausführungsformen von Scheibenfiltern gemäß EP 2 514 500 A1 und US 2020/282345 A1. Allerdings ist der bauliche Aufwand für die Erstellung der einzelnen Filterrahmen eines jeden Moduls erheblich, was verbesserungswürdig erscheint.

Aufgabe der Erfindung ist es daher, einen Scheibenfilter der eingangs genannten Art vorzuschlagen, der sich durch einen einfacheren konstruktiven Aufbau auszeichnet.

Zur Lösung der gestellten Aufgabe schlägt die Erfindung die Ausgestaltung eines Scheibenfilters gemäß den Merkmalen des Patentanspruchs 1 vor.

Vorteilhafte Ausgestaltungen und Weiterbildungen der Erfindung sind Gegenstand der abhängigen Ansprüche.

Erfindungsgemäß wird vorgeschlagen, dass die Filterrahmen in einem Abstand voneinander unter Bildung eines Freiraumes zwischen benachbarten Filterrahmen auf der Trommel angeordnet sind und in jedem Freiraum Zwischenfiltereinsätze aufgenommen sind und alle Filtereinsätze und Zwischenfiltereinsätze außenseitig mit Abschlussprofilen abgedeckt sind, die die in den Filterrahmen aufgenommenen Filtereinsätze und die Zwischenfiltereinsätze überdecken und einander entlang einer geschlossenen Kreisbahn unter Ausbildung eines Abdeckrings fortsetzen. Auf diese Weise kann die Anzahl der benötigten Filterrahmen, die notwendig ist, um eine vollständige Filterscheibe zu bilden, um die Hälfte reduziert werden. Um den Umfang der Filterscheibe betrachtet wechseln sich Filterrahmen mit darin aufgenommenen Filtereinsätzen und Freiräume mit darin aufgenommenen Zwischenfiltereinsätzen ab und ergänzen sich gemeinsam zu einer um die Trommel umlaufenden Filterscheibe. Zwischen je zwei benachbarten Filterrahmen, die jeweils einen Filtereinsatz aufnehmen, wird ein Zwischenfiltereinsatz aufgenommen.

Um die Teilevielfalt zu verringern und einen gleichmäßigen Aufbau des erfindungsgemäßen Scheibenfilters zu ermöglichen, sind nach einem Vorschlag der Erfindung die Filtereinsätze und die Zwischenfiltereinsätze gleich ausgebildet, d.h. sie sind untereinander beliebig austauschbar.

Nach einem weiteren Vorschlag der Erfindung umfassen die Filtereinsätze und die Zwischenfiltereinsätze jeweils zwei in axialer Richtung der Trommel voneinander beabstandete und deckungsgleich angeordnete Filterelemente, die innerhalb des Filterrahmens bzw. zwischen zwei benachbarten Filterrahmen einen Filterraum definieren, durch welchen eine zu reinigende Flüssigkeit strömen kann.

Jedes Filterelement kann nach weiterem Vorschlag der Erfindung ein in einer Tragstruktur, beispielsweise einem Drahtrahmen, aufgespanntes Filtertuch umfassen. Diese Filtertücher können z.B. auf Basis von Kunststofffasern gebildet sein, etwa Polyester oder Polytetrafluorethylen. Auch können die Filtertücher aus Edelstahldrähten gebildet sein. Sie sind bevorzugt säurefest und rückspülbar. Die Filtertücher weisen je nach Anwendungsfall Filteröffnungen im Bereich von 10 bis 50 µm, bei Anwendungen zur Mikrofiltration auch im Bereich von lediglich etwa 10 bis 20 µm auf.

Nach einem weiteren Vorschlag der Erfindung sind die an den einander zugewandten Innenseiten und der dem benachbarten Freiraum zugewandten Außenseite der Rahmenstreben nach Vorschlag der Erfindung Aufnahmenuten vorgesehen, in die die Filtereinsätze bzw. Zwischenfiltereinsätze einschiebbar sind, um sie im Bereich der Filterrahmen bzw. Freiräume randseitig zu fixieren. Sofern die Filtereinsätze und Zwischenfiltereinsätze zwei voneinander beabstandete Filterelemente umfassen, können entsprechend jeweils zwei parallel zueinander verlaufende Aufnahmenuten an den Innen- und Außenseiten der Rahmenstreben vorgesehen sein.

Nach einem weiteren Vorschlag der Erfindung sind am radial auswärts gelegenen Ende der Filterrahmen Abdeckprofile befestigbar, die die in den Filterrahmen aufgenommenen Filtereinsätze und die Zwischenfiltereinsätze überdecken und einander entlang einer geschlossenen Kreisbahn unter Ausbildung eines Abdeckrings fortsetzen. Auf diese Weise wird ein gleichförmiger und belastbarer radial außenseitiger Abschluss der Filterscheiben erhalten. Zum Austausch eines einzelnen Filtereinsatzes bzw. Zwischenfiltereinsatzes oder eines zugehörigen Filterelements braucht lediglich das zugeordnete Abdeckprofil abgenommen werden, so dass nachfolgend der entsprechende Filtereinsatz bzw. Zwischenfiltereinsatz radial nach außen herausgezogen und gegen einen neuen Filter- bzw. Zwischenfiltereinsatz ausgetauscht werden kann.

Weitere Ausgestaltungen und Einzelheiten der Erfindung werden nachfolgend anhand der ein Ausführungsbeispiel darstellenden Zeichnung erläutert. Es zeigen:
- Figur 1: eine perspektivische ausschnittsweise Darstellung eines Scheibenfilters gemäß der Erfindung;
- Figur 2: eine Aufsicht auf eine Rahmenstrebe des erfindungsgemäßen Scheibenfilters.

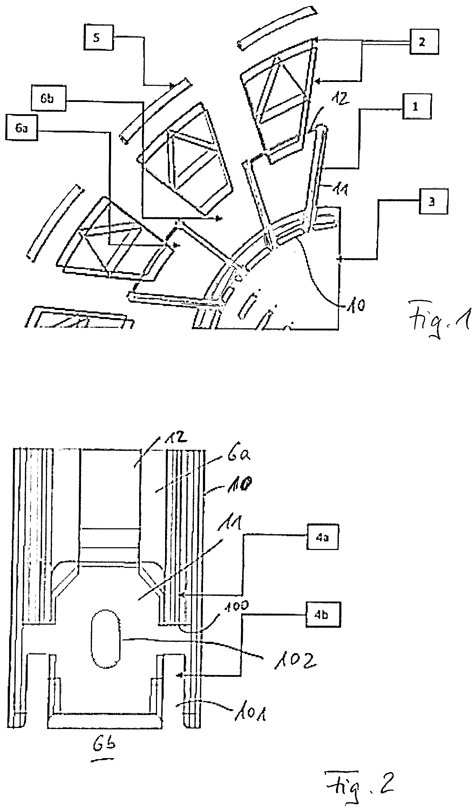

Aus der Figur 1 ist ausschnittsweise der Aufbau eines Scheibenfilters ersichtlich, wie er beispielsweise zur Abscheidung von Algen- oder Planktonverunreinigungen in einem Wasserstrom oder auch zur Dritt- oder Nachfiltration kommunaler Abwässer Verwendung finden kann.

Zentrales Bauteil des dargestellten Scheibenfilters ist eine beispielsweise aus einem Edelstahlblechabschnitt gebildete Trommel 3, die zu einem Zylinder gerollt und verschweißt ist und mittels eines nicht dargestellten Drehantriebes bei Bedarf um ihre Längsachse gedreht werden kann und der Durchleitung eines Wasserstromes dient. Die zylindrische Wandung der Trommel ist mit regelmäßig angeordneten Durchbrechungen versehen, durch die der Wasserstrom in radialer Richtung hindurchtreten kann.

Zur Ausbildung eines Scheibenfilters sind im Bereich der Durchbrechungen Filterrahmen 1 derart befestigt, dass sie radial über die Trommel überstehen. Jeder Filterrahmen 1 umfasst zwei radial innenseitig am Trommelumfang in einer gemeinsamen Fussplatte 10 befestigte und radial nach außen abstehende Rahmenstreben 11, die am radial äußeren Ende über eine bogenförmige Verbindungsstrebe 12 verbunden sind, so dass sie gemeinsam einen geschlossenen Filterrahmen 1 mit einem inneren Aufnahmeraum 6a ausbilden, siehe auch Figur 2. Jeder Filterrahmen 1 ist nach Art eines Filtersegments oder Filtermoduls segmentartiger Bestandteil einer um den Umfang der Trommel umlaufenden Filterscheibe. Der Filterrahmen 1 und dessen vorangehend erläuterten Teile können beispielsweise aus Aluminium-Druckguss oder einem geeigneten, ggf. faserverstärkten Kunststoff hergestellt sein.

Im Bereich der einander zugewandten Innenseiten der Rahmenstreben 11 eines Filterrahmens 1 sind zwei in axialer Richtung der Trommel 3 voneinander beabstandete und parallel zueinander in radialer Richtung verlaufende Aufnahmenuten 100 vorgesehen, in die ein Filtereinsatz, bestehend aus zwei deckungsgleich angeordneten Filterelementen 2 eingesetzt ist. Jedes Filterelement 2 besteht dabei aus einem Rahmen 20 und einem darin aufgespannten Filtertuch 21, z.B. aus Polyestergewebe mit einer Maschenweite von 10 bis 50 µm. Die Filterelemente 2 des Filtereinsatzes sind einzeln in den Filterrahmen 1 einsetzbar und austauschbar. Radial außenseitig wird auf den Filterrahmen 1 mit eingesetztem Filterelement ein Abdeckprofil 5 als Abschluss aufgebracht, beispielsweise mit den Rahmenstreben 11 in einer zentralen Bohrung 102 verschraubt. Insofern wird innerhalb des Aufnahmeraums 6a des Filterrahmens 1 ein Filtereinsatz, bestehend aus zwei deckungsgleichen und voneinander beabstandeten Filterelementen 2 eingesetzt.

Der zum dargestellten Filterrahmen 1 nächstgelegene benachbarte Filterrahmen 1 schließt in Umfangsrichtung der Trommel 3 betrachtet nicht unmittelbar an den anderen Filterrahmen 1 an, sondern ist in einem Abstand zu diesem auf der Trommel 3 angeordnet, so dass zwischen benachbarten Filterrahmen 1 ein Freiraum 6b verbleibt. Dieser Freiraum 6b ist so bemessen, dass weitere Filterelemente 2 als Zwischenfiltereinsatz zwischen die Filterrahmen 1 eingesetzt werden können, ohne dass sie über einen eigenen zugeordneten Filterrahmen 1 verfügen. Zu diesem Zweck weisen die Rahmenstreben 11 der Filterrahmen 1 auch auf ihrer jeweiligen Außenseite, die dem Freiraum 6b zugewandt sind, entsprechende Aufnahmenuten 101 auf, in die die Filterelemente 2 der Zwischenfiltereinsätze einsteckbar und außenseitig mit einem Abschlussprofil 5 abdeckbar sind.

Insbesondere ist vorgesehen, dass die Filterelemente 2 der Filtereinsätze und der Zwischenfiltereinsätze gleich, d.h. identisch und untereinander austauschbar ausgestaltet sind. Die Anzahl der zur Ausbildung einer umfänglich um die Trommel 3 durchgängig umlaufenden Filterscheibe erforderlichen Filterrahmen 1 kann somit um die Hälfte reduziert werden.

Wenn alle Filtereinsätze und Zwischenfiltereinsätze in den Aufnahmeräumen 6a und den Freiräumen 6b montiert und mittels Abschlussprofilen 5 abgedeckt sind, wird eine umfänglich durchgängig verlaufende und von einem aus den einander fortsetzenden Abschlussprofilen 5 gebildeten außenseitigen Abschlussring umgebene Filterscheibe erhalten. Es versteht sich, dass auf der Trommel 3 eine Vielzahl derartiger Filterscheiben angeordnet werden können.

## Patentansprüche

1. Scheibenfilter, umfassend eine zentral angeordnete Trommel (3) und mindestens eine auf der Trommel (3) angeordnete Filterscheibe, die eine Vielzahl von radial über die Trommel (3) überstehenden Filtersegmenten umfasst, welche jeweils einen geschlossenen Filterrahmen (1) mit zwei auf der Trommel (3) befestigten und radial abstehenden Rahmenstreben (11) aufweisen, die am radial äußeren Ende über eine bogenförmige Verbindungsstrebe (12) verbunden sind und in dem geschlossenen Filterrahmen (1) gehalterte Filtereinsätze aufweisen, **dadurch gekennzeichnet, dass** die Filterrahmen (1) in einem Abstand voneinander unter Bildung eines Freiraumes (6b) zwischen benachbarten Filterrahmen (1) auf der Trommel (3) angeordnet sind und in jeden Freiraum (6b) Zwischenfiltereinsätze aufgenommen sind und alle Filtereinsätze und Zwischenfiltereinsätze außenseitig mit Abschlussprofilen (5) abgedeckt sind, die die in den Filterrahmen aufgenommenen Filtereinsätze und die Zwischenfiltereinsätze überdecken und einander entlang einer geschlossenen Kreisbahn unter Ausbildung eines Abdeckrings fortsetzen.

2. Scheibenfilter nach Anspruch 1, **dadurch gekennzeichnet, dass** die Filtereinsätze und die Zwischenfiltereinsätze gleich ausgebildet sind.

3. Scheibenfilter nach Anspruch 1 oder 2, **dadurch gekennzeichnet, dass** die Filtereinsätze und die Zwischenfiltereinsätze jeweils zwei in axialer Richtung der Trommel (3) voneinander beabstandete und deckungsgleich angeordnete Filterelemente (2) umfassen.

4. Scheibenfilter nach Anspruch 3, **dadurch gekennzeichnet, dass** die Filterelemente (2) jeweils ein in einer Tragstruktur aufgespanntes Filtertuch (21) umfassen.

5. Scheibenfilter nach einem der Ansprüche 1 bis 4, **dadurch gekennzeichnet, dass** die Rahmenstreben (11) auf der einander zugewandten Innenseite und der dem benachbarten Freiraum (6b) zugewandten Außenseite mit Aufnahmenuten (100) für die Filtereinsätze bzw. die Zwischenfiltereinsätze ausgebildet sind.

## Claims

1. Disc filter, comprising a centrally arranged drum (3) and at least one filter disc arranged on the drum (3), which filter disc comprises a plurality of filter segments projecting radially beyond the drum (3), which filter segments each have a closed filter frame (1) with two radially projecting frame struts (11) secured to the drum (3) which are connected at the radially outer end via an arcuate connecting strut (12) and have filter inserts mounted in the closed filter frame (1), **characterized in that** the filter frames (1) are arranged on the drum (3) at a distance from one another, forming a free space (6b) between adjacent filter frames (1) and intermediate filter inserts are accommodated in each free space (6b), and all filter inserts and intermediate filter inserts are covered on the outside with end profiles (5), which cover the filter inserts accommodated in the filter frames and the intermediate filter inserts and continue one another along a closed circular path, forming a cover ring.

2. Disc filter according to claim 1, **characterized in that** the filter inserts and the intermediate filter inserts are configured to be identical.

3. Disc filter according to claim 1 or 2, **characterized in that** the filter inserts and the intermediate filter inserts each comprise two filter elements (2) spaced apart from one another in the axial direction of the drum (3) and arranged to be congruent.

4. Disc filter according to claim 3, **characterized in that** the filter elements (2) each comprise a filter cloth (21) stretched in a support structure.

5. Disc filter according to any one of claims 1 to 4, **characterized in that** the frame struts (11) are formed with receiving grooves (100) for the filter inserts or the intermediate filter inserts on the inner side facing one another and on the outer side facing the adjacent free space (6b).

## Revendications

1. Filtre à disques, comprenant un tambour (3) disposé centralement et au moins un disque filtrant disposé sur le tambour (3) qui comprend une pluralité de segments de filtre faisant saillie radialement au-delà du tambour (3), segments qui présentent respectivement un cadre de filtre (1) fermé avec deux entretoises de cadre (11) fixées sur le tambour (3) et faisant saillie radialement qui sont connectées à l'extrémité radialement extérieure par une entretoise de connexion (12) en forme d'arc et présentent des cartouches filtrantes maintenues dans le cadre de filtre (1) fermé, **caractérisé en ce que** les cadres de filtre (1) sont disposés à une certaine distance les uns des autres en formant un espace libre (6b) entre des cadres de filtre (1) adjacents sur le tambour (3) et des cartouches filtrantes intermédiaires sont logées dans chaque espace libre (6b) et toutes les cartouches filtrantes et cartouches filtrantes intermédiaires sont recouvertes à l'extérieur par des profilés de fermeture (5) qui recouvrent les cartouches filtrantes logées dans les cadres de filtre et les cartouches filtrantes intermédiaires et se prolongent les uns les autres le long d'une trajectoire circulaire fermée en formant un anneau de recouvrement.

2. Filtre à disques selon la revendication 1, **caractérisé en ce que** les cartouches filtrantes et les cartouches filtrantes intermédiaires sont conçues de manière identique.

3. Filtre à disques selon la revendication 1 ou 2, **caractérisé en ce que** les cartouches filtrantes et les cartouches filtrantes intermédiaires comprennent respectivement deux éléments filtrants (2) espacés l'un de l'autre dans la direction axiale du tambour (3) et disposés de manière à coïncider.

4. Filtre à disques selon la revendication 3, **caractérisé en ce que** les éléments filtrants (2) comprennent respectivement une toile filtrante (21) tendue dans une structure de support.

5. Filtre à disques selon l'une quelconque des revendications 1 à 4, **caractérisé en ce que** les entretoises de cadre (11) sont formées, sur le côté intérieur tourné l'un vers l'autre et sur le côté extérieur tourné vers l'espace libre (6b) voisin, avec des rainures de logement (100) pour les cartouches filtrantes ou les cartouches filtrantes intermédiaires.
